# EUROPEAN PATENT APPLICATION

(11) **EP 4 779 999 A1**
(43) Date of publication of application: **22.07.2026**
(21) Application number: 25305060.3
(22) Date of filing: 17.01.2025
(51) Int. Cl.: H04N 21/44, H04N 21/81, H04N 21/854

(54) **INDEXING SIGNALING IN MPEG AVATAR REPRESENTATION FORMAT**

(71) Applicant: InterDigital CE Patent Holdings, SAS, 75017 Paris (FR)
(72) Inventor: COVA REGATEIRO, João Pedro, 35220 CHATEAUBOURG (FR); GOSSELIN, Philippe Henri, 35235 THORIGNE-FOUILLARD (FR); AVRIL, Quentin, 35830 BETTON (FR); LE CLERC, Francois, 35590 L'HERMITAGE (FR)
(74) Representative: Vossius & Partner Patentanwälte Rechtsanwälte mbB

(57) **Abstract**

Some embodiments of a method may include: obtaining a MPEG Avatar Representation Format (ARF)-based file, wherein the MPEG ARF-based file comprises information corresponding to one or more assets of an avatar, and wherein the information corresponding to the one or more assets comprises a respective identifier for each of the one or more assets; verifying each of the respective identifiers is unique; and populating a data structure with the information corresponding to the one or more assets.

## Description

### INCORPORATION BY REFERENCE

The present application incorporates by reference in their entirety the following applications: European Patent Application Serial No. EP25305036, entitled "CONTROLLERS SIGNALING IN MPEG AVATAR REPRESENTATION FORMAT" and filed January 14, 2025 ("'036 application"); European Patent Application Serial No. EP23305405, entitled "Avatar signaling on MPEG-I Scene Description" and filed March 24, 2023 ("'405 application"); International Patent Application Serial No. PCT/EP2024/057092, entitled "Avatar Signaling on MPEG-I Scene Description" and filed March 15, 2024 ("'092 application"); European Patent Application Serial No. EP23306167, entitled "Controllers on MPEG-I Scene Description" and filed July 10, 2023 ("'167 application"); International Patent Application Serial No. PCT/EP2024/068034, entitled "Controllers on MPEG-I Scene Description" and filed June 26, 2024 ("'034 application"); European Patent Application Serial No. EP24305094, entitled "Avatar JSON Interchange File Format" and filed January 15, 2024 ("'094 application"); International Patent Application Serial No. PCT/EP2024/078214, entitled "Avatar JSON Interchange File Format" and filed October 8, 2024 ("'214 application"); European Patent Application Serial No. EP24305458, entitled "Avatars Controllers in Scene Descriptions" and filed March 27, 2024 ('"458 application"); and European Patent Application Serial No. EP24306850, entitled "Controllers in MPEG Avatar Representation Format" and filed November 1, 2024 ("'850 application").

### BACKGROUND

The present application is related to avatars.

### SUMMARY

An example method in accordance with some embodiments may include: obtaining a MPEG Avatar Representation Format (ARF)-based file, wherein the MPEG ARF-based file includes information corresponding to one or more assets of an avatar, and wherein the information corresponding to the one or more assets includes a respective identifier for each of the one or more assets; verifying each of the respective identifiers is unique; and populating a data structure with the information corresponding to the one or more assets.

For some embodiments of the example method, the information corresponding to the one or more assets includes a respective name property for each of the one or more assets.

For some embodiments of the example method, the information corresponding to the asset includes at least one level of detail property for each of the one or more assets.

For some embodiments of the example method, verifying each of the respective identifiers is unique includes: repeating a search loop for each of the respective identifiers, wherein the search loop includes: setting a current identifier to a next identifier of the respective identifiers; searching for the current identifier in information corresponding to already parsed assets; and verifying that the current identifier is not found in the information corresponding to already parsed assets.

For some embodiments of the example method, verifying each of the respective identifiers is unique includes: repeating a search loop for each of the respective identifiers, wherein the search loop includes: setting a current identifier to a next identifier of the respective identifiers; searching for the current identifier in information corresponding to all objects with an identifier property already parsed; and verifying that the current identifier is not found in the information corresponding to all objects with the identifier property already parsed.

Some embodiments of the example method may further include: obtaining a search identifier, wherein the search identifier indicates an identifier of an asset to be searched; comparing the search identifier with each identifier corresponding to an asset in the data structure; and returning a search result of the comparing.

For some embodiments of the example method, returning the search result includes returning a value indicating that an asset corresponding to the search identifier was not found.

For some embodiments of the example method, returning the search result includes returning information indicating a location of the asset corresponding to the search identifier.

For some embodiments of the example method, the location of the asset indicates a location of the asset in the data structure.

For some embodiments of the example method, the location of the asset indicates a location of the asset in an external file.

For some embodiments of the example method, the data structure includes an entire JavaScript Object Notation (JSON) graph of the ARF.

For some embodiments of the example method, verifying each of the respective identifiers is unique produces a positive result, and populating the data structure is contingent upon producing the positive result.

Some embodiments of the example method may further include: extracting information from the MPEG ARF-based file; parsing the extracted information for structure property information; and populating the data structure with the structure property information.

Some embodiments of the example method may further include: obtaining a list of assets from the structure property information; and parsing the extracted information for asset property information based on the list of assets, wherein populating the data structure with the information corresponding to the one or more assets includes populating the data structure with the asset property information.

An example apparatus in accordance with some embodiments may include: a processor; and a memory storing instructions operative, when executed by the processor, to cause the apparatus to perform the method of any one of the claims listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example set of MPEG ARF main properties according to some embodiments.
FIG. 3 is a flowchart illustrating an example process for parsing the Structure property according to some embodiments.
FIG. 4 is a flowchart illustrating an example process for parsing the Asset property according to some embodiments.
FIG. 5 is a flowchart illustrating an example process for retrieval of an asset according to some embodiments.
FIG. 6 is a flowchart illustrating an example process for handling MPEG Avatar Representation Format asset identifiers according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

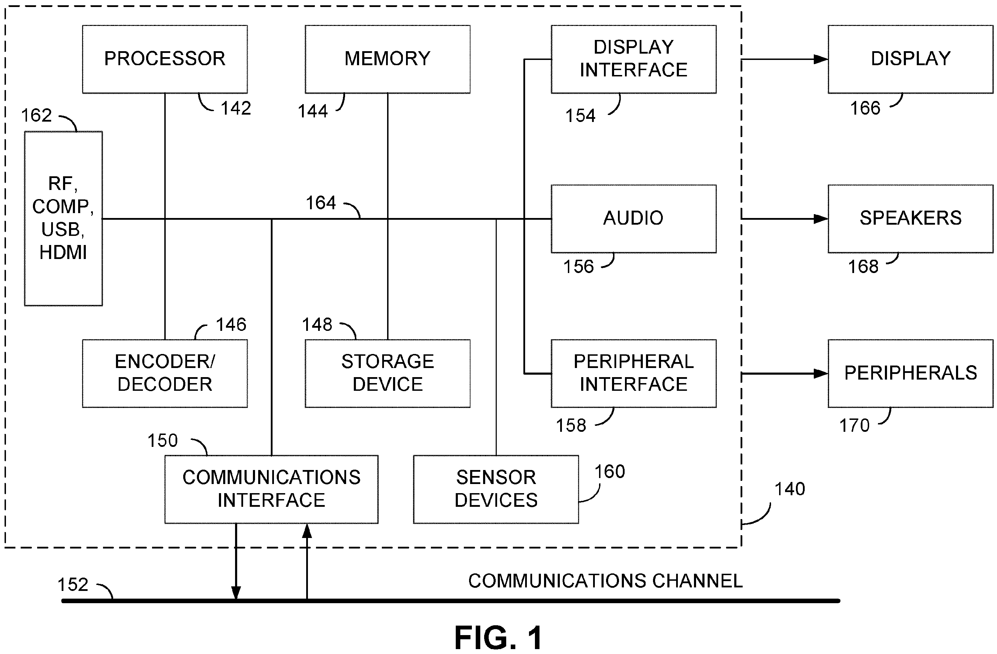

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the encoding of avatar indexing in the MPEG Avatar Representation Format (ARF). The indexing of avatar components permits the decoder to identify each component of an avatar and distinguish the component within unordered lists or structures of data. The indexing permits the creation of relationships and assignment of pointers to external data object e.g., compressed gITF files with data related to the ARF file. ARF was introduced in MPEG-I Scene Description through the input contribution m69882 to MPEG meeting #148 and currently improved with output document N01398.

Using the current MPEG-I Scene Description (SD) format and the gITF indexing system, a set of components are indexed with the same order given in the file. To disambiguate components, a "name" property is given for look-up in the file for the unique identifier. The identifier, though, is not guaranteed to be unique for all properties and may bring confusion in some applications. This application discusses indexing of all components that are missing such mechanism. This application is understood to introduce indexing signaling to the ARF format.

### MPEG ARF with "id" Properties

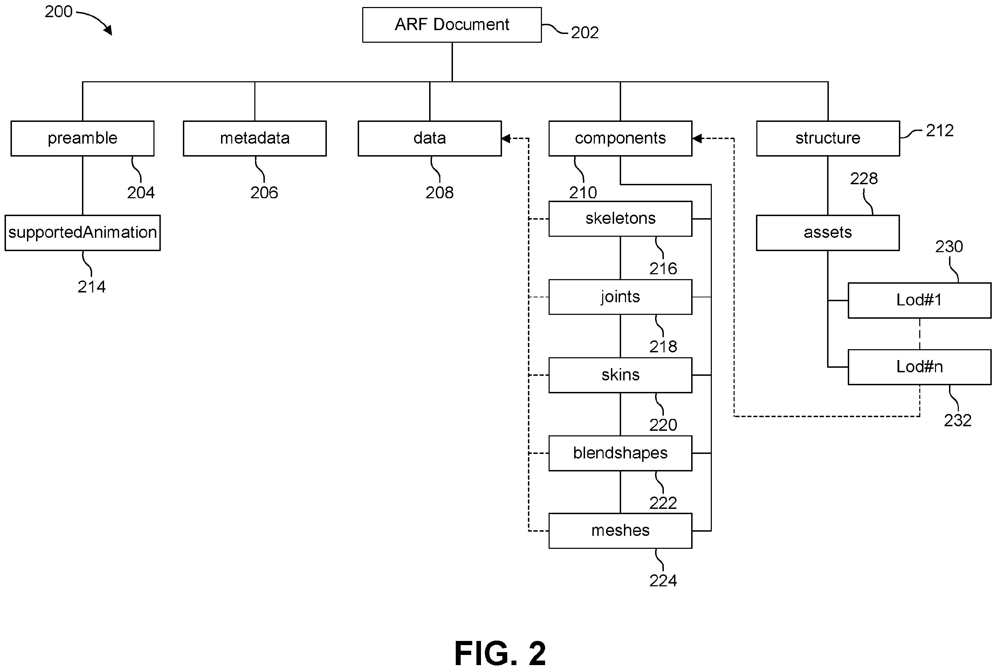

FIG. 2 is a schematic illustration showing an example set of MPEG ARF main properties according to some embodiments. MPEG ARF may be amended to use a set of containers regrouped into categories as shown in FIG. 1, but as of the writing of the present application, the ControllerSets property data structure, for example, is not in the MPEG ARF specification.

The example structure 200 has an ARF document 202 and several categories of containers hanging off the ARF document.

The "preamble" container 204 is used to uniquely identify the format and characteristics of the file. In particular, the "preamble" container 204 contains a "supportedAnimation" property 214 which lists the streaming animation formats that the file supports.

The "metadata" container 206 contains main information, such as age or gender, of the avatar.

The "data" container 208 contains low-level data, like arrays of values, tensors, or references to external files. Items of the "data" container 208 are referenced by components.

The "components" container 210 contains several component containers (skeletons 216, joints 218, skins 220, blendshapes 222, and meshes 224), which are dedicated to a type of component.

The "structure" container 212 contains the "assets" component 228, which defines the components for an avatar part (body, hand, head, ...) for a level of detail (LOD) 230, 232.

### Structure

Table 1 lists the elements of a "structure" root component. The "structure" component describes the structure of the ARF container. The "structure" component lists the assets and levels of detail included in this ARF container and provides information about the encryption scheme used to decrypt the encrypted components of this ARF container.

**Table 1.**

| **Name** | **Type** | **Use** | **Description** |
|---|---|---|---|
| assets | array(Asset) | M | List the assets included in the ARF container. |

### Asset

Table 2 lists the elements of an "assets" object. Assets constitute the key part of the ARF container for some embodiments. An ARF container may contain multiple assets that define the base avatar model of the user or that are associated with the base avatar model (e.g., digital assets like garments and wearables). Each asset may be accessed and extracted individually.

**Table 2.**

| **Name** | **Type** | **Use** | **Description** |
|---|---|---|---|
| name | string | M | The name of the asset. |
| id | integer | M | A unique identifier of the asset. |
| lods | array(LOD) | M | A list of level of details available for this asset in the ARF container. |

The "id" property uniquely identifies an asset in the "assets" list of the "structure" root property. In some embodiments, the data type for the "id" element may be different. For example, the data type may be a string.

### Level of Detail (LOD)

Table 3 lists the properties of an LOD object. An LOD object provides a link to all components of an asset at a specific level of detail. This link facilitates partial access to the ARF container by allowing extraction of the desired assets at the desired level of detail.

**Table 3.**

| **Name** | **Type** | **Use** | **Description** |
|---|---|---|---|
| name | string | M | The name of the LOD. |
| id | integer | M | A unique identifier of the LOD. |
| skins | array(number) | M | List of references to all skins that are part of this asset. |
| meshes | array(number) | M | List of non-skinned meshes that are part of this asset. |
| skeletons | array(number) | M | List of references to skeletons in the ARF container. |
| blendshapes | array(number) | M | List of references to blendshape sets in the ARF container. |

The "id" property uniquely identifies a lod in the "lods" list in the "asset" property of an asset in the "assets" list in the "structure" root property. In some embodiments, the data type of the "id" element may be different. For example, the data type may be a string.

In some embodiments, the "id" property of an lod is globally unique across all lods, for any asset that contains the id. In other words, two LODs from different assets cannot have the same id.

### Components

Table 4 lists the properties of a "components" root object. The "components" component is the core of the ARF document. The "components" component lists all components of the ARF container and provides sufficient information to access and use these components for reconstruction and animation of a base avatar model.

**Table 4.**

| **Name** | **Type** | **Use** | **Description** |
|---|---|---|---|
| skeletons | array(Skeleton) | M | A list of skeletons used to describe the avatar skeletal asset. |
| skins | array(Skin) | M | A list of assets that are stored in this ARF container. |
| meshes | array(Mesh) | M | A list of geometries used to describe the avatar asset. |
| nodes | array(Node) | M | A list of nodes used to organize, merge and describe and transform the avatar components. |
| blendshapes | array(Blendshapes) | M | A list of blendshape sets used to describe the avatar animations. |

### Skeleton

Table 5 lists the properties of a "skeleton" object. The "skeleton" component describes a partial or complete skeleton that is used in the ARF container. The skeleton describes the joints and their relationships.

**Table 5.**

| **Name** | **Type** | **Use** | **Description** |
|---|---|---|---|
| name | string | M | The name of the skeleton. |
| id | integer | M | A unique identifier of this skeleton. |
| root | number | M | Reference to the root joint for the skeleton in the nodes collection. |
| joints | array(number) | M | List of references to the list of joints in node collection of the ARF container. |
| inverseBindMatrix | number | M | References an item in the data collection of the ARF container that contains the inverse bind matrices for the joints in the same order as the joints. |

The "id" property uniquely identifies a skeleton in the "skeletons" list of the "components" root property. In some embodiments, the data type of the "id" element may be different. For example, the data type may be a string.

### Skin

Table 6 lists the properties of a "skin" object. The "skin" component is a skinned mesh representing a part of the Avatar body or an associated digital asset. A skin defines the mapping between a mesh and a skeleton, enabling mesh deformation through a skeletal animation system.

**Table 6.**

| **Name** | **Type** | **Use** | **Description** |
|---|---|---|---|
| name | string | M | The name of the skin. |
| id | integer | M | A unique identifier of this skin. |
| mapping | string | M | this contains a path indicator that can be used to assign this skinned mesh to a particular node in the scene graph. |
| skeleton | number | M | a reference to the skeleton. |
| mesh | number | M | a reference to the mesh of the skin. |
| weights | number | M | reference to an item in the data collection that contains the weights associated with every joint of the skeleton. |

The "id" property uniquely identifies a skin in the "skins" list in the "components" root property. In some embodiments, the data type of the "id" element may be different. For example, the data type may be a string.

### Node

Table 7 lists the properties of a "node" object. The "node" component defines the skeletal joints hierarchy and structure for the ARF container. Each skeleton in the ARF container makes reference to a set of nodes.

**Table 7.**

| **Name** | **Type** | **Use** | **Description** |
|---|---|---|---|
| name | string | M | The name of the node. |
| id | integer | M | A unique identifier of this node. |
| mapping | string | M | The joint type or semantics e.g., "full_body/upper_body/right_arm". |
| parent | number | O | If present, the identifier of the parent node of this node. This attribute shall be present for all nodes, except for the root. |
| children | array | O | if present, a list of identifiers of the children nodes of this node. |
| scale | array(number) | O | The node's non-uniform scale, given as the scaling factors along the x,y and z axes. |
| rotation | array(number) | O | The node's unit quaternion rotation in the order (x,y,z,w), where w is the scalar. |
| translation | array(number) | O | The node's translation along the x,y and z axes. |
| transform | array(number) | M | Provides a 4x4 transformation matrix for the node to define its position and orientation. |

The "id" property uniquely identifies a node in the "nodes" list in the "components" root property. In some embodiments, the data type of the "id" element may be different. For example, the data type may be a string.

### Data

Table 8 lists the properties of a "data" object. The "data" component contains low-level content of the ARF container e.g., meshes, tensors, images, or other data. Each data component may be compressed and/or encrypted.

**Table 8.**

| **Name** | **Type** | **Use** | **Description** |
|---|---|---|---|
| name | string | M | a string that defines the name of this data. |
| id | integer | M | A unique identifier of this data. |
| type | string | M | a string that provides the mime type of the data. |
| uri | string | M | a string that defines the data content or reference to the data content depending on type. |
| offset | integer | O | defines the number of bytes used as offset into the data content as pointed to by uri. |
| byteLength | integer | O | defines the number of bytes to use in data content. |
| compression | string | O | an identifier of the compressor used to compress this LoD representation of the mesh. |
| protection | number | O | an identifier of the protection configuration that is applied to encrypt this LoD representation of the mesh. |

The "id" property uniquely identifies a data object in the "data" root property. In some embodiments, the data type of the "id" element may be different. For example, the data type may be a string.

### Unique id Across All Objects

In some embodiments, the value of the "id" property of an object is unique across all types of objects. For example, the id of an lod object cannot be the same as the id of a skeleton or skin object. Such a configuration may prevent errors because an object may never be confused with another one.

### Processing Model

Parsing for the Structure and Asset properties are presented below. The principle is the same for other types of objects.

### Parsing

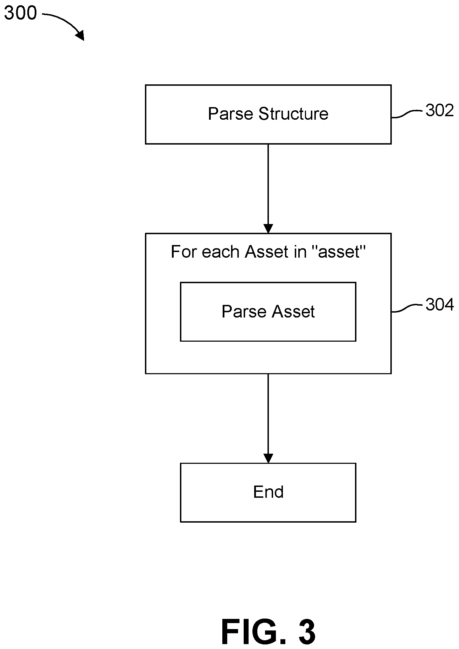

FIG. 3 is a flowchart illustrating an example process for parsing the Structure property according to some embodiments. The example process 300 of FIG. 3 shows the parsing of the Structure property. The Parse Structure process 302 happens each time a Structure property is processed. A loop 304 is executed for each Asset object listed in the "asset" list. Inside the loop 304, the Parse Asset process is executed. Upon exiting the loop 304, parsing ends.

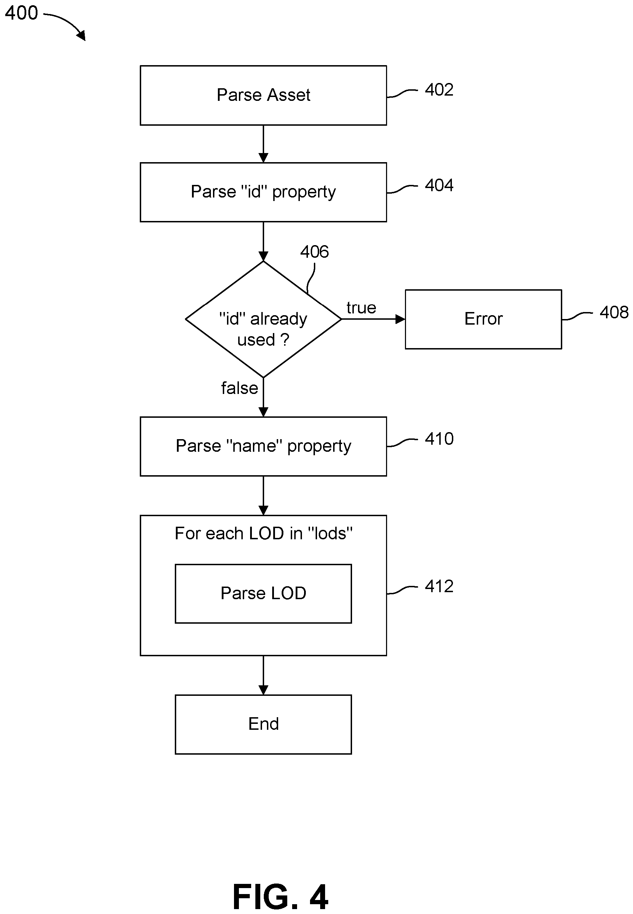

FIG. 4 is a flowchart illustrating an example process for parsing the Asset property according to some embodiments. The example process 400 of FIG. 4 shows the parsing of the Asset property. The Parse Asset process 402 happens each time an Asset property is processed. In process box 404, the "id" property is parsed. For some embodiments, parsing of the "id" is mandatory, and an error is raised if the "id" property is not present.

A determination 406 is made regarding whether the "id" property was already used. For some embodiments, the "id" property is only searched in the already parsed assets. For some embodiments, the "id" property is searched in all objects with an "id" property that was already parsed. If the "id" property was already used, an error 408 is raised. Otherwise, in process box 410, the "name" property is parsed. For some embodiments, parsing of the "name" property is mandatory, and an error is raised if the "name" property is not present.

A loop 412 is executed for each LOD object listed in the "lods" list. Inside the loop 412, the Parse LOD process is executed. Upon exiting the loop 412, parsing ends.

For some embodiments, the "id" property is globally unique, and there is only a single identifier namespace that spans all of the ARF components and objects. This aspect has the advantage that identifiers may be used to index objects generically (regardless of component or object type), and there will be no confusion. For some embodiments, the enforcement of the global uniqueness of the "id" property may be done at a receiver device, and error messages may be generated if an "id" is determined to not be globally unique.

In the section at the end about Parsing, it was interesting that they suggest enforcing this at the receiver - i.e. checking that all the ID's are globally unique, and 'erroring out' if this is violated. See Step 503.

### Retrieving an Object

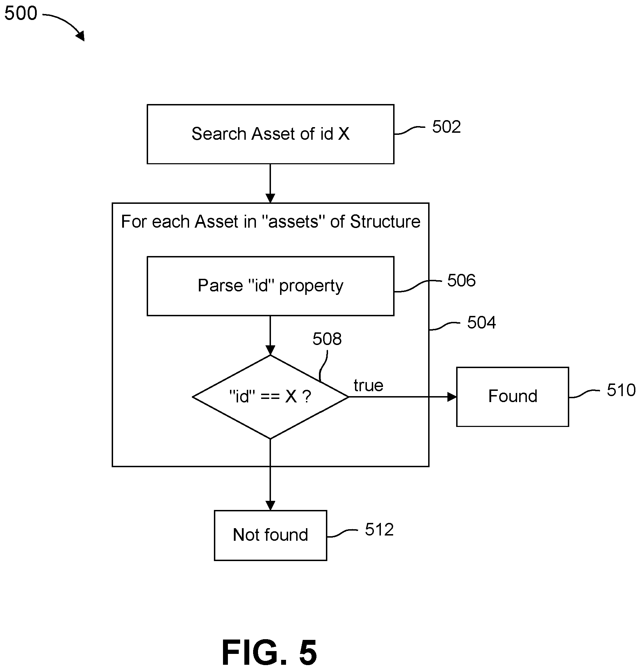

FIG. 5 is a flowchart illustrating an example process for retrieval of an asset according to some embodiments. The example process 500 of FIG. 5 shows the retrieval of an asset. The Search Asset process 502 happens each time an asset is searched given an id. A loop 504 is executed for each Asset object listed in the "assets" list of the Structure root container object. Inside the loop 504, the Parse "id" process 506 is executed. For some embodiments, parsing of the "id" is mandatory, and an error is raised if the "id" property is not present. A determination 508 is made regarding the current asset of the loop 504. If the current asset is the desired asset (e.g., has the same value as X), then the asset was found 510. The process 500 may return a value used to locate the asset, such as a JSON path in ARF file; a pointer; or a reference. If the current asset is not the desired asset, then the asset was not found 512. For some embodiments, no value is returned. For some embodiments, the process 500 returns a value indicating that the value was not found.

For some embodiments in which the id is unique across all objects, the search process may be extended to the traverse the whole JSON graph of the ARF. Each item of the ARF is analyzed, and for those items with an "id" property, the id is compared to the search one. If the "id" is found, then its location is returned.

### Use Case

Identifiers may be used to reference data in external files and make reference to the identifier in the ARF document. For example, if data.id = "head_vertices" and data.uri = "scene.glb", the application may look for data in the "scene.glb" file that contains the same identifier "head_vertices". The data may be extracted, and an association between the data in the ARF document and the glb file may be indicated / created.

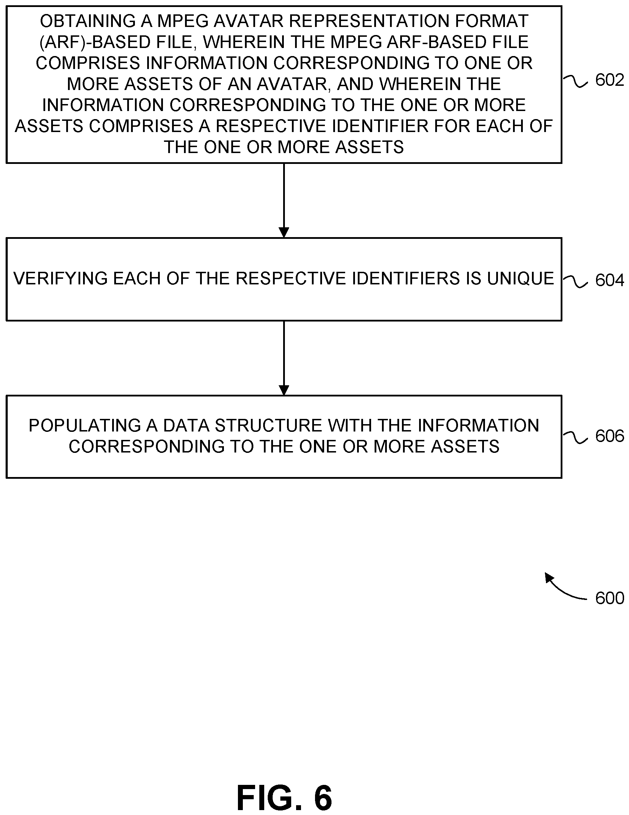

FIG. 6 is a flowchart illustrating an example process for handling MPEG Avatar Representation Format asset identifiers according to some embodiments. For some embodiments, an example process 600 may include obtaining 602 a MPEG Avatar Representation Format (ARF)-based file, wherein the MPEG ARF-based file comprises information corresponding to one or more assets of an avatar, and wherein the information corresponding to the one or more assets comprises a respective identifier for each of the one or more assets. For some embodiments, the example process 600 may further include verifying 604 each of the respective identifiers is unique. For some embodiments, the example process 600 may further include populating 606 a data structure with the information corresponding to the one or more assets.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a MPEG Avatar Representation Format (ARF)-based file, wherein the MPEG ARF-based file includes information corresponding to one or more assets of an avatar, and wherein the information corresponding to the one or more assets includes a respective identifier for each of the one or more assets; verifying each of the respective identifiers is unique; and populating a data structure with the information corresponding to the one or more assets.

For some embodiments of the example method, the information corresponding to the one or more assets includes a respective name property for each of the one or more assets.

For some embodiments of the example method, the information corresponding to the asset includes at least one level of detail property for each of the one or more assets.

For some embodiments of the example method, verifying each of the respective identifiers is unique includes: repeating a search loop for each of the respective identifiers, wherein the search loop includes: setting a current identifier to a next identifier of the respective identifiers; searching for the current identifier in information corresponding to already parsed assets; and verifying that the current identifier is not found in the information corresponding to already parsed assets.

For some embodiments of the example method, verifying each of the respective identifiers is unique includes: repeating a search loop for each of the respective identifiers, wherein the search loop includes: setting a current identifier to a next identifier of the respective identifiers; searching for the current identifier in information corresponding to all objects with an identifier property already parsed; and verifying that the current identifier is not found in the information corresponding to all objects with the identifier property already parsed.

Some embodiments of the example method may further include: obtaining a search identifier, wherein the search identifier indicates an identifier of an asset to be searched; comparing the search identifier with each identifier corresponding to an asset in the data structure; and returning a search result of the comparing.

For some embodiments of the example method, returning the search result includes returning a value indicating that an asset corresponding to the search identifier was not found.

For some embodiments of the example method, returning the search result includes returning information indicating a location of the asset corresponding to the search identifier.

For some embodiments of the example method, the location of the asset indicates a location of the asset in the data structure.

For some embodiments of the example method, the location of the asset indicates a location of the asset in an external file.

For some embodiments of the example method, the data structure includes an entire JavaScript Object Notation (JSON) graph of the ARF.

For some embodiments of the example method, verifying each of the respective identifiers is unique produces a positive result, and populating the data structure is contingent upon producing the positive result.

Some embodiments of the example method may further include: extracting information from the MPEG ARF-based file; parsing the extracted information for structure property information; and populating the data structure with the structure property information.

Some embodiments of the example method may further include: obtaining a list of assets from the structure property information; and parsing the extracted information for asset property information based on the list of assets, wherein populating the data structure with the information corresponding to the one or more assets includes populating the data structure with the asset property information.

An example apparatus in accordance with some embodiments may include: a processor; and a memory storing instructions operative, when executed by the processor, to cause the apparatus to perform the method of any one of the claims listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a MPEG Avatar Representation Format (ARF)-based file,
wherein the MPEG ARF-based file comprises information corresponding to one or more assets of an avatar, and
wherein the information corresponding to the one or more assets comprises a respective identifier for each of the one or more assets;
verifying each of the respective identifiers is unique; and
populating a data structure with the information corresponding to the one or more assets.

2. The method of claim 1, wherein the information corresponding to the one or more assets comprises a respective name property for each of the one or more assets.

3. The method of any one of claims 1-2, wherein the information corresponding to the asset comprises at least one level of detail property for each of the one or more assets.

4. The method of any one of claims 1-3, wherein verifying each of the respective identifiers is unique comprises:
repeating a search loop for each of the respective identifiers,
wherein the search loop comprises:
setting a current identifier to a next identifier of the respective identifiers;
searching for the current identifier in information corresponding to already parsed assets; and
verifying that the current identifier is not found in the information corresponding to already parsed assets.

5. The method of any one of claims 1-3, wherein verifying each of the respective identifiers is unique comprises:
repeating a search loop for each of the respective identifiers,
wherein the search loop comprises:
setting a current identifier to a next identifier of the respective identifiers;
searching for the current identifier in information corresponding to all objects with an identifier property already parsed; and
verifying that the current identifier is not found in the information corresponding to all objects with the identifier property already parsed.

6. The method of any one of claims 1-5, further comprising:
obtaining a search identifier,
wherein the search identifier indicates an identifier of an asset to be searched;
comparing the search identifier with each identifier corresponding to an asset in the data structure; and
returning a search result of the comparing.

7. The method of claim 6, wherein returning the search result comprises returning a value indicating that an asset corresponding to the search identifier was not found.

8. The method of claim 6, wherein returning the search result comprises returning information indicating a location of the asset corresponding to the search identifier.

9. The method of claim 8, wherein the location of the asset indicates a location of the asset in the data structure.

10. The method of claim 8, wherein the location of the asset indicates a location of the asset in an external file.

11. The method of any one of claims 1-10, wherein the data structure comprises an entire JavaScript Object Notation (JSON) graph of the ARF.

12. The method of any one of claims 1-11,
wherein verifying each of the respective identifiers is unique produces a positive result, and
wherein populating the data structure is contingent upon producing the positive result.

13. The method of any one of claims 1-12, further comprising:
extracting information from the MPEG ARF-based file;
parsing the extracted information for structure property information; and
populating the data structure with the structure property information.

14. The method of claim 13, further comprising:
obtaining a list of assets from the structure property information; and
parsing the extracted information for asset property information based on the list of assets,
wherein populating the data structure with the information corresponding to the one or more assets comprises populating the data structure with the asset property information.

15. An apparatus comprising:
a processor; and
a memory storing instructions operative, when executed by the processor, to cause the apparatus to perform the method of any one of claims 1 through 14.
